# EUROPEAN PATENT APPLICATION

(11) **EP 0 726 570 A2**
(43) Date of publication of application: **14.08.1996**
(21) Application number: 96300968.3
(22) Date of filing: 13.02.1996
(51) Int. Cl.: G11B 17/22

(54) **Media library having internal media sorting and media drives having internal random-access media handling facilities**

(30) Priority: 13.02.1995 US 387496
(71) Applicant: INTERNATIONAL BUSINESS MACHINES CORPORATION, Armonk, NY 10504 (US)
(72) Inventor: Dang, Chi-Hung, Tucson, Arizona 85710 (US); Dimitri, Kamal Emile, Tucson, Arizona 85718 (US); Kulakowski, John E., Tucson, Arizona 85715 (US); Means, Rodney J., Tucson, Arizona 85715 (US)
(74) Representative: Davies, Simon Robert

(57) **Abstract**

A media library has optical disks carried in caddies. Each one of a plurality of magazines each carry a number of the optical disks on the caddies. A two-dimensional array of media receptacles receive said magazines for storage. Each of the magazines have an opening for receiving the caddies. Storage of the magazines in the media receptacles is with the magazines opening facing into the media receptacles. One of more media drives are disposed in the two-dimensional array. Each media drive has a plurality of drive ports for receiving the media. Some of the drive ports can receive the magazine while other drive ports receive media removed from the magazines. Usually one media drive has one type of port. Transfer of media from and to the drive ports to and from a play position of a media play device in the media drive is random access. Media sorters and temporary magazine holders are provided in the array. Controls are provided to sort media based on changes in job streams of a data processor and based upon detecting error-prone media. The error-prone media are collected for removal from the library.

## Description

### Field of the Invention

This application relates to signal-storing media libraries, more particularly to automated media libraries having enhanced internal media handling capabilities and those having transportable plural-mediacarrying magazines.

A copy of a related application, commonly-assigned co-pending application for patent, Dang, one of the inventors named in this application, SN 08/334,976, filed November 7, 1994, (TU994043) has been filed herewith and is available on the file.

### Background of the Invention

Data processing, graphics processing and the like, often employ automatically operated signal-storing media libraries. In many applications, the elapsed time to fetch, transport and electronically access a given medium stored in a library can be significant. Therefore, it is desired to provide internal enhancements to and automatically operate such media libraries in a manner to dynamically reduce the elapsed times required for transferring media between media drives and media-storing receptacles in the media library. These enhancements become more important with media having increasing signal storage capacities (also termed more dense libraries). Such enhancements are directed to reducing media picker travel, media mount and dismount times on a media drive, increased random-access capabilities, queuing media in a manner enabling random-access to such media in a queue, using magazines that carry a plurality of media and prefetching media from a storage receptacle to a media drive. As used herein, the term "randomly accessing" means addressing and then accessing any one of several media in any order. One such order may be sequentially.

It is also desired to provide automatic media sorting within a media library, automatic relocating media in anticipation of changing host system needs for media to be mounted on a media drive and automatically sorting media with changing requirements for keeping related media within a close proximity to other related media and the like.

### Discussion of Prior Art

Suzuki in US patent 4,691,617 shows an optical disk player that has a plurality of optical disk carriers in a magazine. An optical drive loader carries a multi-disk magazine. A carriage selects one of the disk holders from the magazine for transferring the disk holder and disk to a disk turntable on a player.

Leonhardt et al in US patent 5,253,246 show a multi-media single-form factor cartridge. The single form-factor cartridge is used in a so-called juke-box machine. Leonhardt et al suggest that their single form-factor cartridge could be advantageously used in an automated library storage system. A magazine carrying a plurality of disk carriers is an IBM 3480 magnetic tape housing.

Bruer et al in US patent 3,789,160 show a dictation-transcription apparatus that can play magnetic disks housed in a multi-disk cartridge. The player has a single load station for receiving one magazine. After the disks are loaded into the player, the multi-disk cartridge is moved to an unload station.

Mabry et al in US patent 4,481,617 show an optical disk drive or player that receives a disk cartridge. The cartridge comprises a disk caddy housed in a disk sleeve. The sleeve and caddy are inserted through a slot into the mechanism. After full insertion, the caddy and sleeve are unlatched to permit removal of the sleeve while leaving the caddy in a load position for playing. The caddy is moved to a spindle for playing. Unloading follows a reverse procedure.

Hashimoto in Japan published application 62-197885 describes removing and inserting a disk from and into a multi-disk magazine. An empty space is always provided in the magazine to facilitate re-ordering the disk positions within the magazine (sorting). The magazine has an opening facing a picker to facilitate the sorting. The magazine is moved for enabling sorting. It is desired to avoid the requirement of always having an empty magazine slot for effecting automatic media sorting using a media-containing magazine.

Research disclosure number 24235 on pages 273-4, June 1984 shows a cartridge library having multi-disk magazines. Each of the magazines has a handle for manual insertion into and removal from a library array. As such, each of the magazines has an opening facing a picking mechanism for enabling access to the magnetic media contained in the respective magazines.

IBM Technical Disclosure Bulletin, SEND-AHEAD STAGING FOR SINGLE-GRIPPER PICKER IN OPTICAL LIBRARY, Vol 32, No. 6B, November 1989, shows a plurality of empty cartridge storage receptacles or slots positioned near an optical drive. If a load request is received while the drive is loaded with an optical disk, the picker fetches the requested optical disk from its usual storage location and queues it for the drive in the empty nearby storage receptacle. When the drive becomes available, the transport distance for the requested optical disk is reduced.

Kulakowski et al in US Patent 5,303,214 show a multi-media library having a large plurality of multi-media bins inserted into storage receptacles. The bins are manually removable from a "back" of the library (side away from a media picker) for replacement but an automatic picker system picks individual media from the bins for transport to media drives. The bins are not transported by the picker. A concept of media affinity is also disclosed.

A publication by a co-inventor of this application, Dang, in the IBM Technical Disclosure Bulletin, Vol. 37, No. 09, September 1994, MULTIPLE INPUTS DRIVE LOADER FOR SELECTING MEDIA UNITS FROM A STACK MAGAZINE, pages 251-253.

IBM Technical Disclosure Bulletin, in an article SEND-AHEAD STAGING FOR SINGLE-GRIPPER PICKER IN OPTICAL LIBRARY. Vol. 32 No. 6B in page 357 (November, 1989) discloses that providing a small number of pairs of vacant storage slots adjacent an optical drive enables prefetching optical disks to the optical drive locality. As soon as any of the prefetched optical disks are needed, the picker travel distance carrying the prefetched optical disks can be substantially less than from the respective storage slots for such media. The article does not discuss picker time reaching the prefetched optical disks. This arrangement does require the main library picker to perform optical disk transfer into the optical disk drive. It is desired to have a random-access media queue that does not require intervention by a main library picker.

IBM Technical Disclosure Bulletin. in an article by Larson et al entitled RANDOM-ACCESS RECORD STORAGE, Vol. 15, No. 4 September 1972, pp. 1202-3, discloses a one-half inch magnetic tape library system. This system includes a plurality of separate main-storage arrays connected to a set of buffer-storage arrays. The buffer storage arrays store tape reels for reducing access times to such tape reels. Two sets of remotely located magnetic tape drives are respectively connected to the buffer storage by two tape carriers, respectively. This plurality of remotely located magnetic tape drives receive and return tape reels from and to the buffer storage via the two tape carriers, respectively. It is desired to reduce the size and arrangement of the disclosed magnetic tape library system and provide for a more flexible transport of media between storage compartments and media drives.

Camras in US patent 3,134,550 shows an early magnetic tape library system employing rack storage of magnetic tape. A plurality of tape reels are stored in movable trays between the rack storage and a carousel buffer storage. The individual tape reels are removed from the multireel containing trays onto the carrousel. The tape player/recorder fetches and returns individual reels of tape form and to the carousel. Carousel rotation provides random-access to the tape reels. The carousel, separate from the rack storage, is connected to the rack storage by an overhead travelling crane.

Munro in US patent 4,864,438 shows a plurality of large media libraries interconnected together. Each library has its own media drives.

### Summary of the Invention

The present invention provides for internal automatic media sorting and random-access queuing of media in a media-drive assemblage disposed within an array of media storage receptacles.

A media storage library has a two-dimensional array of addressable media storage receptacle locations, a plurality of open-sided media storage receptacles at said receptacle locations for storing media, respectively and a picker movably disposed with said open-sided media storage receptacles for randomly accessing any addressed-one of said receptacles. A media drive disposed in or next to the array uses at least one of said receptacle locations. The media drive has means for receiving and yielding media and for randomly-accessing said media while in said media drive for recording and reading on and from said media. A media loader in said media drive within the array has a plurality of ports for randomly exchanging said media with said picker. The media loader has storage for storing a second number of said media at any given instant and randomly loading and unloading media to and from a play position in said media drive. Each port has an opening facing said picker for randomly receiving and yielding media from and to said picker. The ports are randomly accessed by said media loader for receiving and yielding said media from and to said picker. The magazines are stored in respective media storing receptacles with an access opening in the magazine facing into the receptacle such that no media may be picked from the magazine while it is stored in the receptacle.

In one aspect of the invention, a plurality of media-carrying magazines, each magazine can store a number, greater than unity, of said media. Each of said media receptacles receive and removably store one of the magazines. The picker carries at least one of said magazines between an addressed one of said media receptacles and the media loader. The media loader has a media receiver for removing one of said media in a predetermined respective one of said magazines at said media loader for moving media between said predetermined respective one of said magazines and the play position in the media drive.

In another aspect of the invention, automatic sorting of the media, within or between, the magazines is provided. Media receivers in the array selectively receive media. Moving the picker combined with the selective picking, effects media sorting. In another aspect, the media drive has movable carriers that effect media sorting independently of the picker.

A media storage library having a two-dimensional array of addressable media storage receptacle locations, said array having an open-side wall with media storage receptacles having access openings, respectively, at said open-side wall and disposed at respective ones of said media storage receptacle locations, said receptacles for storing magazines that contain a plurality of media, a picker movably disposed with said open-sided wall for randomly accessing any addressed-one of said receptacles through said access openings, respectively, an improvement including, in combination:
said media receptacles respectively receiving and removably storing one of said magazines such that said open end of each said stored magazine faces into said media receptacles;
a media drive in said array occupying at least one of said a receptacle locations having means for receiving and yielding media for accessing said media while in said media drive for recording and reading on and from said media; and
said picker carrying at least one of said magazines between an addressed one of said media receptacles and said media devices with said open-end of each said carried magazine faces said two-dimensional array;
said media being optical disks, each one of said optical disks having a first diameter and a spindle receiving aperture at a centre of said optical disk;
caddies respectively holding said optical disks in said media, respectively; each said caddy having a central aperture with a diameter less than said first diameter;
said media drive having a media play device at said play position and a turntable disposed adjacent one end of said travel path and having a diameter less than said first diameter such that each one of said caddies move past said turntable while said optical disk carried by said each one of the caddies is deposited on said turntable for rotation therewith as a loaded optical disk; and
an upstanding spindle on said turntable for engaging said loaded optical disk at said play position through said spindle receiving aperture for positioning said loaded optical disk centrally of said turntable.

An embodiment provides a method for operating a media library including steps of:
providing a plurality of storage receptacles having storage access openings for receiving magazines containing a plurality of media;
facing said storage access openings toward a predetermined travel path;
providing said magazines with media access openings at one ends and with closed ends opposite to said one ends, respectively;
inserting and removing media into and from said magazine through said media access openings, respectively;
inserting said magazines into said media receptacles such that said media access openings face into said media receptacles, respectively; and
carrying said magazines along said travel path with said media access openings always facing said media receptacles.

A still further embodiment provides a method further including steps of:
providing in predetermined ones of said media receptacles a drive access opening at respective ends opposite to said storage access openings;
retrieving and storing media from and into said magazines disposed in said predetermined ones of said receptacles through said drive access openings; and
adjacent said drive access openings recording and reading signals onto and from said media retrieved through said drive access openings.

Embodiments of the present invention will now be described by way of example only, with reference to the accompanying drawings, in which:

Fig. 1 is a high-level flow chart showing optimizing media locations in a media-library in response to changes or optimization of data processing.

Fig. 2 is a high-level flow chart showing media library operations for automatically maintaining high media quality in the library.

Fig. 3 is a schematic diagram of a media library employing the present invention.

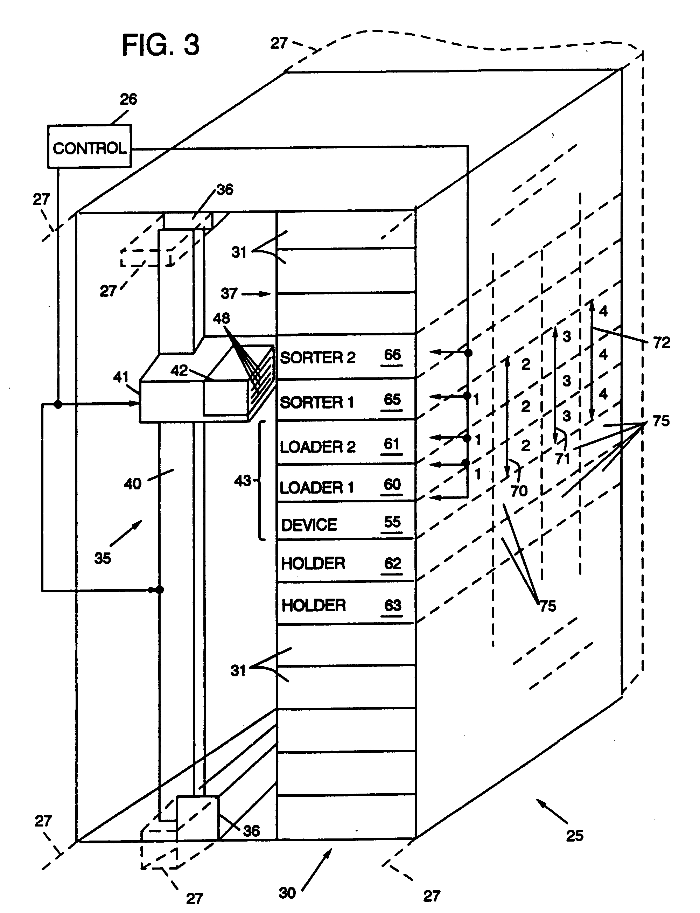

Fig's 4 and 4A are simplified diagrams showing a multi-carrier random-access media transfer apparatus in a media drive of the Fig. 3 illustrated media library.

Fig's. 5 through 7 illustrate a media drive that effects random-access media queuing and sorting.

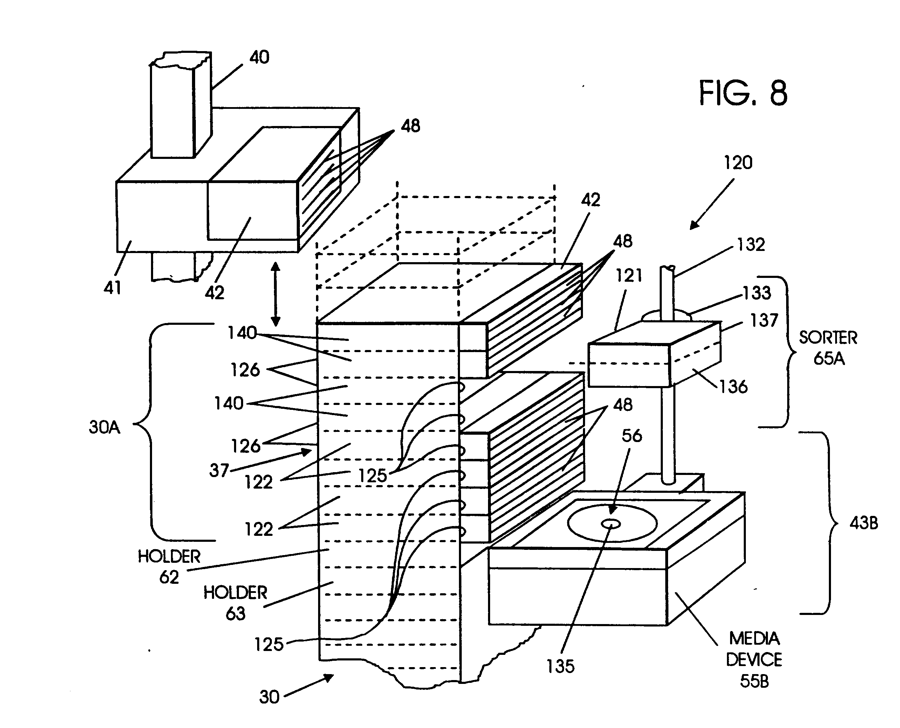

Fig. 8 illustrates, in a simplified form, another media drive that effects random-access media queuing and sorting.

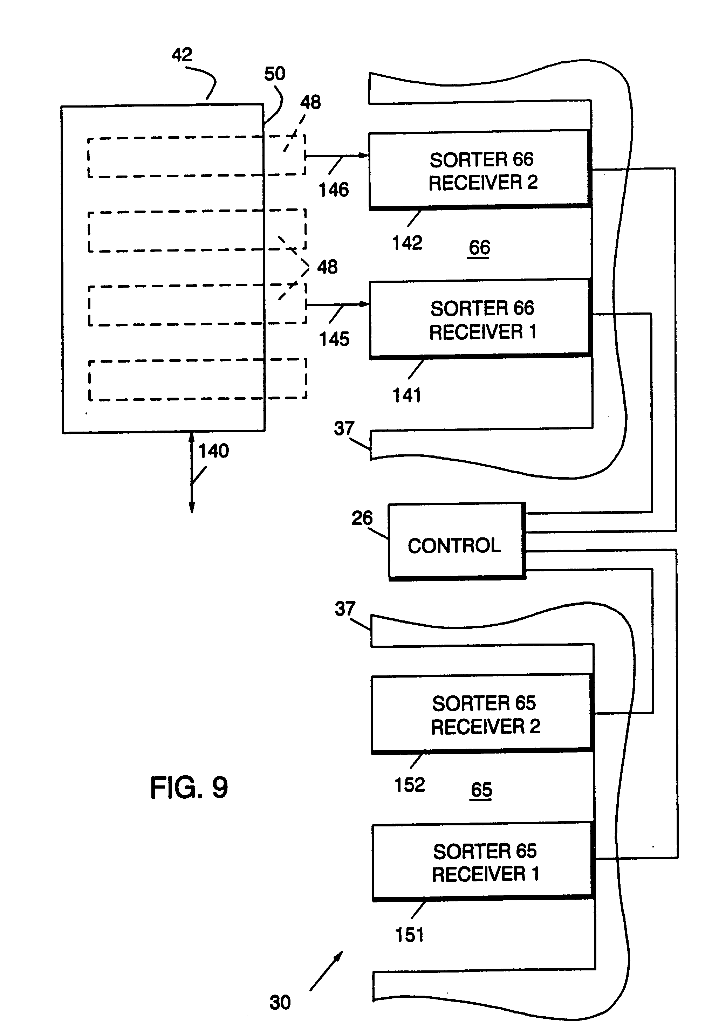

Fig. 9 diagrammatically illustrates a media sorter arrangement.

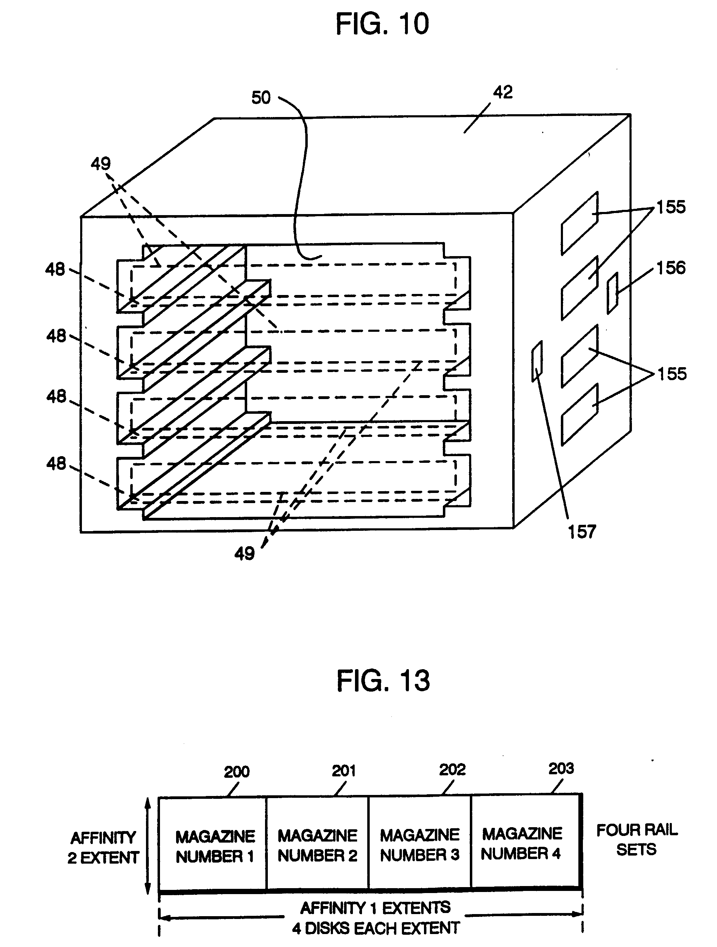

Fig. 10 illustrates a multi-media magazine.

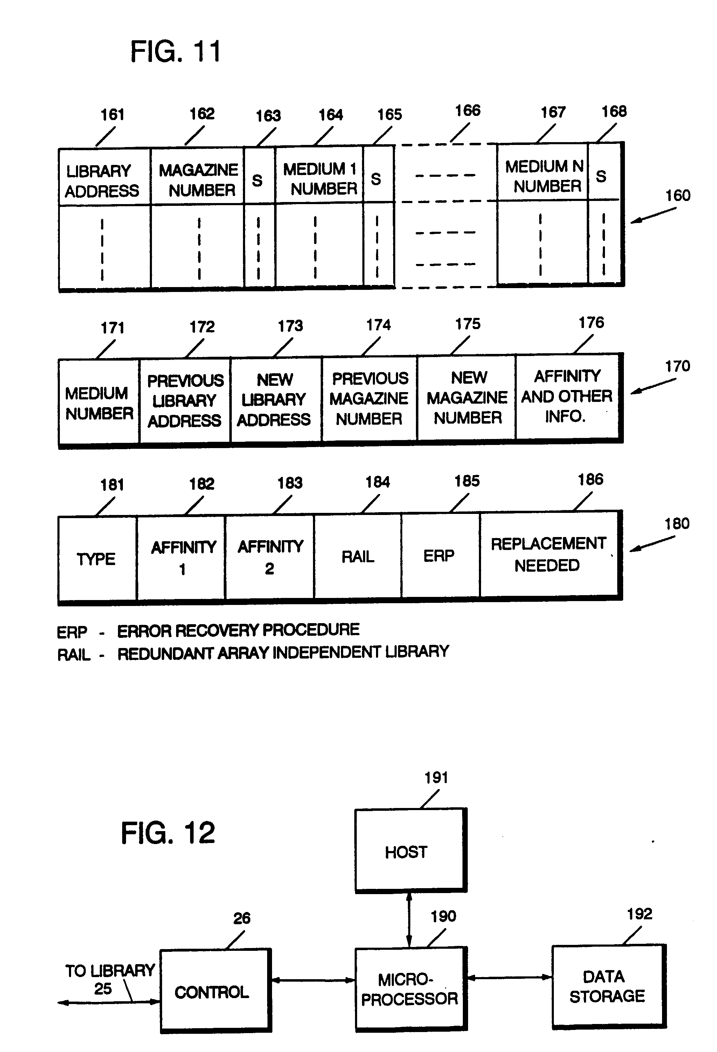

Fig. 11 illustrates, in simplified form, exemplary data structures usable in the Fig. 3 illustrated library.

Fig. 12 illustrates a data processing system using the Fig. 3 illustrated library.

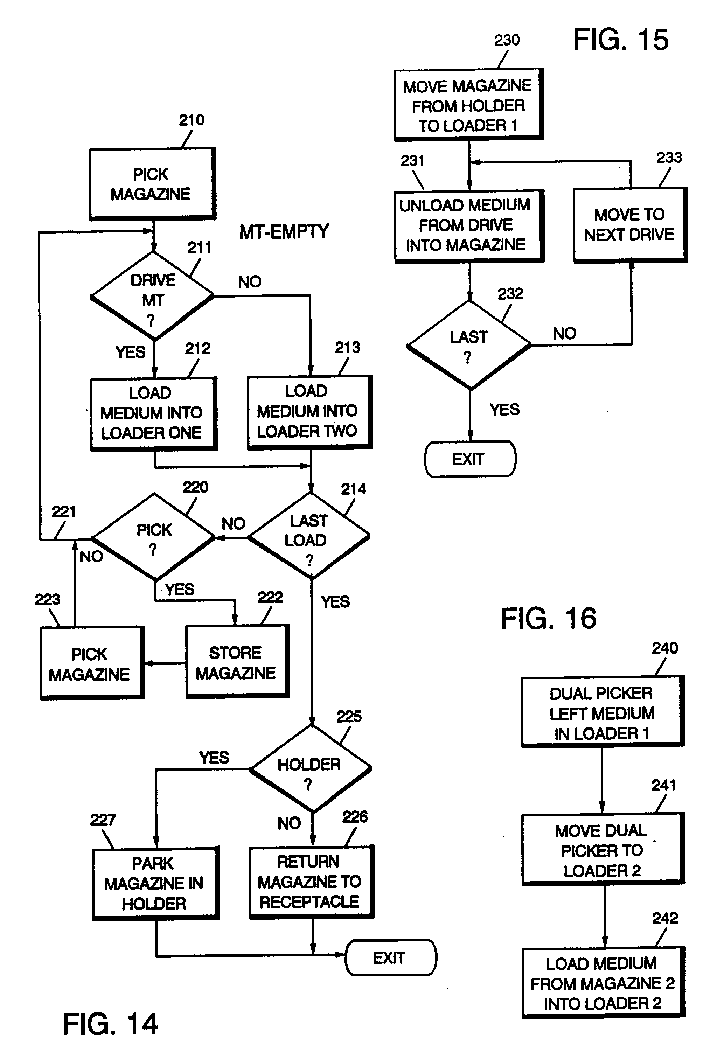

Fig. 13 diagrammatically illustrates a multi-media virtual redundant array inexpensive device having an affinity control.

Fig's 14-19 are machine operation flow charts that illustrate operations implementing the present invention in the illustrated apparatus.

Referring to Fig's 1 and 2, optimize applications step 10 indicates a host processor changing its internal operations for accommodating changing shift operations, i.e. such as shifting from day-time real-time controls to night-time batch processing, and the like. Additional jobs of diverse types, changing processing priorities and the like can require dynamic changes in data processing, as is known. Step 11 is a routine in the later-described library that responds to the changing needs of a host processor to rearrange (sort) media in a library for reducing access times to selected media. Such sorting includes moving magazines having plural record media to advantageous library locations, moving individual media between magazines for creating affinity groups of such media to facilitate access to all media in an affinity group. Such selected media are those media containing data relating to upcoming more important data processing operations.

During normal data processing operations, an original order of disks are stored in a magazine changer. That is, a top disk in an original disk order may end up as a middle one of the disks in that magazine. Such unintended or incidental reordering disks in any magazine can complicate data management in attaching host processors. Therefore, it is desirable, after a data processing operation to re-order or sort the disks within a magazine to match the original order of disks in each magazine. Such sorting is done entirely within the library and before a host processor again accesses data from any of the disks.

Step 12 physically moves (sorts) the disks in magazines having disks in an order other than the original order. Sorting magazines within a library is intended to locate media expected to be used closer to media drives.

Step 13 includes sorting media within a media drive for changing individual storage medium locations with respect to a play position of a media drive. Each media drive may load a plurality of media. Such a media drive may have facilities for sorting media within a magazine or among plural magazines independently of a later described library picker.

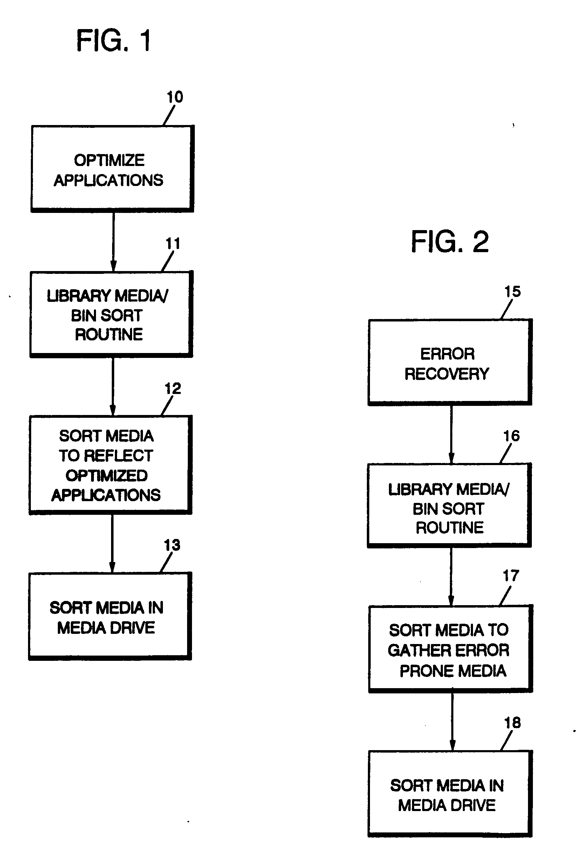

Fig. 2 shows error control and recovery of media and media container related error conditions. Detection and indication of such errors may be implemented, in part, by the invention of Kulakowski et al in US patent 5,233,584 which is incorporated by reference herein. In any event, error recovery procedures (ERP) are employed, as is known, for recovering from media and media container related errors. Upon reaching a predetermined error rate or a predetermined number of non-recoverable errors from a given medium, then replacement of such items is required. Step 15 responds to such error conditions for automatically replacing such error-causing elements of the library system. A list of items to be replaced is generated. The step 16 sort routine sets up a set of moves by a picker (later described) for replacing defective items in step 17. The actual error prone (error-causing) media are collected in one or more magazines and ejected from the library. Step 17 may include copying data from the media to be ejected to the new replacement media. Similar later-described media caddies are similarly replaced by temporarily ejecting the media, manually replacing defective caddies and returning the media to the library in new replacement caddies. Such media may be sorted in a media drive in step 18, as will become apparent.

Fig. 3 is a simplified showing of a media library 25. Electronic control 26 controls operation of library 25. Dashed lines 27 indicate that media library 25 may be larger than the illustrated media library. Media stored in media library 25 may be any form of machine-sensible media, whether writable or not. Examples of such media include optical disks, as illustrated, magnetic disks, magnetic cards, magnetic tape in cartridges and the like. Media library 25 includes rectangular array 30 having a number of media storing receptacles 31. A travelling elevator 35, herein termed a picker, moves horizontally on tracks or rails 36 disposed along array 30 for accessing media stored in the array via openings facing picker 35 and identified as open-face wall 37. Picker 35 includes horizontally-movable upright 40 that moves across the facing wall 37. Media carrier 41 moves vertically on the upright 40 such that each and everyone of the receptacles 31 can be accessed via the openfaced wall 37. The Media carrier 41 includes a usual gripper for fetching, storing and carrying media containing magazines 42 between the media-storing receptacles and a media drive 43. In the illustrated embodiment, one magazine 42 is carried at a time. As is known, a plurality of magazines may be carried in a media carrier 41. Each magazine 42 contains a plurality of media 49 (Fig. 10), shown as optical disks. Optical disks 49 are respectively supported and carried by individual disk caddies 48. Each magazine 42 has a media access opening 50 (Fig's 9 and 10) that faces into a media storage receptacle 31 while stored therein. Media carrier 41 carries each magazine 42 with the opening 50 facing open wall 37 (Fig's 3 and 10).

Media drive 43 has a media play device 55 with a play position 56 (Fig's 7 and 8). As shown in Fig. 3, media drive 43 includes a loader 1 and 2 enumerated 60 and 61. Loaders 1 and 2 receive and yield individual optical disks 49 on respective caddies 48 from and to media carrier 41, as will become apparent. Loaders 1 and 2 then move the caddies to and from the play position 56 in media play device 55. Additionally, a pair of magazine holders 62 and 63 are positioned adjacent the media drive 43 in array 30. Such magazine holders 62 and 63 provide temporary storage for the magazines. Further, sorter elements 65 and 66 are used as later described for sorting optical disks 48 within and between magazines 42. It is desired that optical disk sorters 65 and 66 and magazine holders 62 and 63 are disposed immediately adjacent media drive 43. Picker 35 is movable to one extremity of the tracks 36 to serve as a media IO station 49. An openable closure (not shown) in library 25 enables manual access to picker 42 for inserting or removing a magazine 50 into or from library 25.

Redundant array inexpensive disks (RAID) are known and are described in Patterson et al in the ACM Journal March 1988, pp 109-116 in an article entitled "A CASE FOR REDUNDANT ARRAYS OF INEXPENSIVE DISKS". Such RAID's are fixed disk devices. A virtual RAID, later described, preferably uses N adjacent media drives. While one media drive may be used, such a selection requires additional media movements that may create objectionable degradation of library 25 performance. In the illustrated embodiment, four physically-adjacent media devices 1-4 are provided and designated as 43 and 70-72, respectively. The term "physically-adjacent" includes media storage receptacles and sorter receptacles interposed between adjacent media drives. Each of the virtual RAID supporting devices respectively has a pair of holder receptacles collectively designated as 75. The virtual RAID is later described in greater detail.

Control 26 is connected to sorters 65 and 66, media drive 43 (loaders 1 and 2 plus media play device), and picker 35 for controller operations of these elements of library 25. Only one dual sorter 65, 66 is provided in the illustrated library. Media sorting can also be achieved within any of the media devices 43 and 70-72.

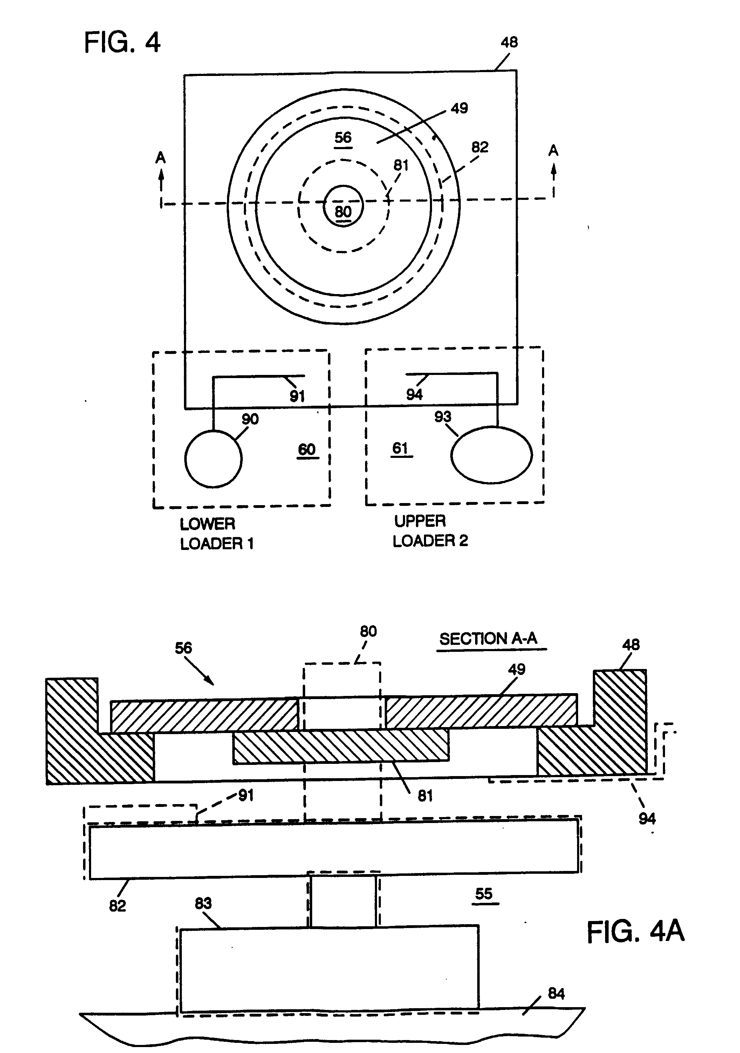

Fig's 4 and 4A are a simplified diagrammatic plan-view of the loaders 1 and 2 and the media play device 55. Fig. 4A is a schematic cross-sectional view of the Fig. 4 illustrated media drive taken along line A--A. Loader 1, working in receptacle 60, is a lower loader while loader 2, working in receptacle 61, is an upper loader. That is, caddy receiver 91 of loader 1 is below caddy receiver 94 of loader 2. In this manner two caddies 48 can be simultaneously handled by the media device.

Fig. 4A is a diagrammatic cross-section illustrating loading and unloading of an optical disk 49 onto and from a play position 56. Upper and lower loaders 1 and 2 each have a vertically moveable caddy receiver which is moveable to and from the play position 56. While media carriers 41 is holding a magazine 42 aligned with either lower loader 1 or upper 2 loader receptacle positions 60 or 61, respectively, receiver 91 for loader 1 or receiver 94 for loader 2 is aligned with an addressed caddy 48 containing disk 49 in a slot 50. This alignment enables picking and loading a disk 49 from caddy 48 by the drive 55. Arbitrarily, loader 1 only picks and loads from loader 1 receptacle 60 while loader 2 only picks and loads caddies from loader 2 receptacle 61. While loaders 1 and 2 are diagrammatically shown as being side-by-side, the caddy receiver 91 is physically below caddy receiver 94. Since lower caddy receiver 91 can move to caddy stop 82, upper caddy 94 can access turntable 81 as later described. vertical supports 90 and 93 extend respectively from media play device 55 to loader 1 and 2 receptacles 60 and 61, as seen in Fig. 3. Caddy receivers 91 and 94 are preferably movable to a bypass or inactive position (not shown). Such caddy receivers may be a bifurcated plate (fork) that cradles a caddy while allowing an optical disk 49 to be left on a turntable while the caddy receiver and caddy continue downward motion. For example, loader 1 caddy receiver 91 is movable to be below later-described caddy stop 82 such that loader 2 caddy receiver 94 may load or unload a caddy 48/optical disk 49 to or from play position 56. That is, when loading or unloading a medium 49 onto or from turntable 81 (Fig. 4A) by loader 2, the loader 1 caddy receiver 91 is moved to be below turntable 81, as at caddy stop 82, as shown by dashed line 91 representation of caddy receiver 91. In an alternate construction, caddy receivers 91 and 94 are pivoted downwardly to enable receivers 91 and 94, respectively, to bypass each other when one of the receivers 91/94 is carrying a caddy 48. The later described load-unload sequencing is based upon the Fig. 4A showing to provide a better understanding of the operation of loaders 1 and 2 in the illustrated construction.

As a caddy 48 is lowered to play position 56, carried optical disk 49 is engaged and held for rotation by turntable 81 fixed on for rotation with upstanding spindle 80. As the caddy receiver 94 continues downwardly, caddy 48 leaves optical disk 49 on turntable 82 and comes to rest on caddy stop 82. The media play device 55 includes spindlerotating motor 83 suitably mounted on a frame 84 of media playing device 55.

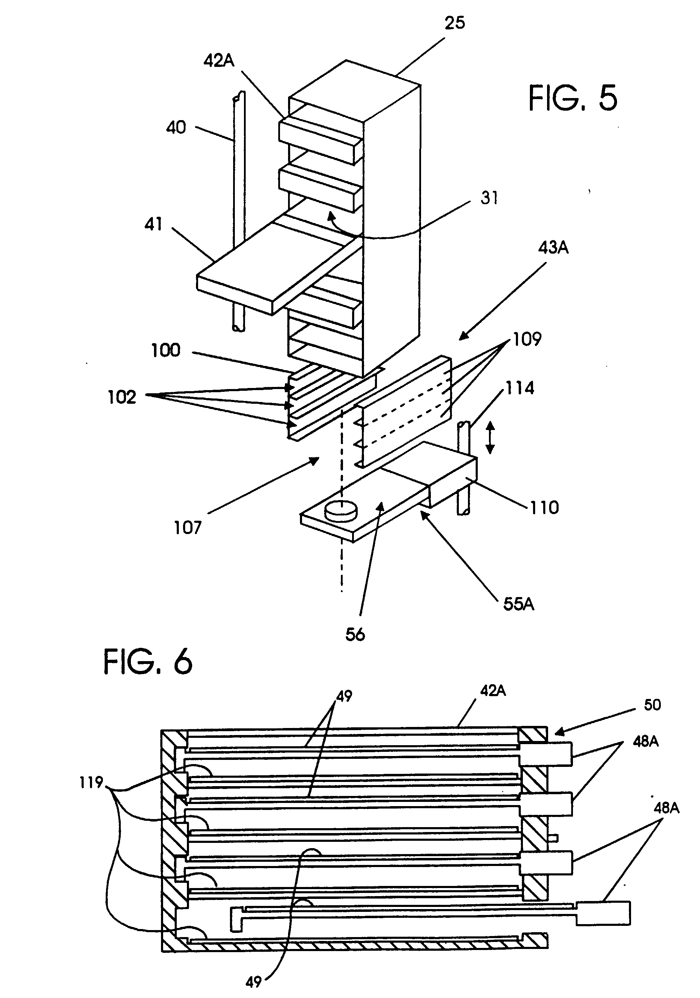

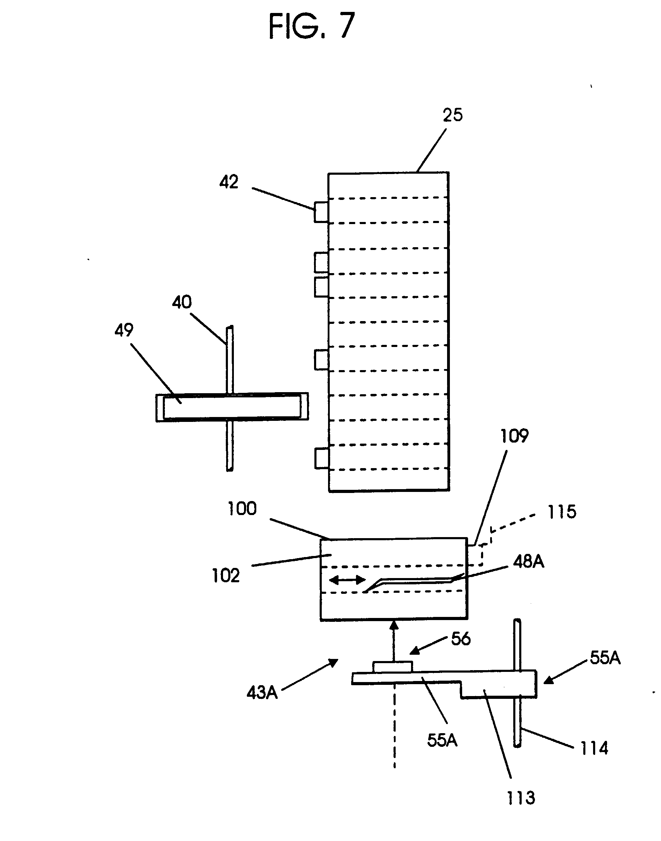

Fig's 5-7 diagrammatically illustrate a second type of media device identified by numeral 43A. Fig. 6 illustrates a second embodiment of magazine 42, identified by numeral 42A. Media device 43A has a multi-slot 102 loader 100. Each slot 102 can receive a caddy 48A carrying an optical disk 49. A Picker 41 carries magazine 42A from its storage receptacle 31 to multi-slot loader 100. Loader 100 has an opening 107 providing access for vertically movable media play device 55A to receive an optical disk 49 and its caddy 48A in play position 56. Device transporter 110 moves media play device vertically for engaging a disk 49 for rotation and access. Each slot has a caddy retainer 109. Loader 100 has a number of slots 102 not greater than the number of caddies in a magazine. Loading one caddy 48A and its optical disk onto device 55A, requires picker 41 to insert its carrier magazine 42A into loader 100 such that a number of caddies 48A equal to the number of slots 102, enter the loader 100. One of the caddy retainers 109 is actuated to latch one of the caddies into loader 100. Picker 41 retracts from loader 1 carrying with it all caddies except the latched caddy. Then, control 26 actuates device mover 110 to move vertically along pole 114 in path 115 for moving play position 56 of device 55A into engagement with the latched media, as best seen in Fig. 7.

Fig. 6 illustrates magazine 42A having four caddies 48A and four optical disks 49. Bottom caddy 48A is shown as being latched in a slot 102. Flipping magazine 42 over enables accessing a second set of four optical disks 119. After flipping magazine 42A, the four optical disks 49 reside in the magazine out of the respective caddies 48A such that only the second set of four optical disk 119 can be accessed.

Fig. 8 illustrates media device 43B and sorter 65A. This figure is derived from the above referred to Dang publication. Sorter 65A and media device 43B share media transfer apparatus 120 that transfers media 49 in a random-access arrangement. The portion 30A of array 30 is included in media device 43B and sorter 65A. Portion 30A has so-called "feed-through" receptacles. Each receptacle 122 of media device 43B and receptacle 140 of sorter 120 are open at both ends. Rear openings 126 of receptacles 122 and 140 enable magazine 42 insertion and removal by media carrier 41. Front openings 125 of receptacles 122 and 140 enable optical disk 49 accessing by sorter 120 using holder 121. Holder 121 also transports optical disks 49 in their caddies to and from play position 56 of media device 43B. That is, a disk 49 in its caddy 48 is fetched out of its storage slot in a magazine 42 to be transported by media holder 121 using usual picker receivers, termed receivers below (not shown). Media device 55B of media drive 43B, disposed below a bottom one of the receptacles 122 and adjacent holder receptacles 62 and 63, as see in Fig. 8. Media device 55B performs the usual recording operations of recording data, reading data and erasing data. Media device 55B is aligned with the travel path of holder 121 such that holder 121 is in a disk medium play position 56 while media device 55B is accessing a disk medium. Media device 55B is disposed below a bottom one of the media device 43B magazine-storing receptacles 122 such that while holder 121 is in play position 56, holder 121 is not aligned with any of the receptacles 122. Each of the loader receptacles 121 compartments have a front opening 125 facing holder 121 for enabling random internal accessing of media caddies 48 and respective media 49 for transport to and from media device 55B. Each of the media device 43B receptacles 122 have a rear opening 126 at open-face wall 37 facing away from holder 121 for enabling picker 35 to insert and remove magazines into and from loader receptacles 121 externally to media drive 43b. Media transport apparatus 120 has a reciprocating elevator comprising a support pole 132, motor 133 vertically moving holder 121 along the receptacle 122 front openings 125. Holder 121 is movably cantilevered from pole 132 in a known manner. As holder 121 descends toward media device 55B with an optical disk caddy 48 fetched from a magazine 42, a device hub (not shown but of usual construction) of a contained optical disk 49 engages spindle 135 of media device 55B for rotation therewith. See Fig. 4A for a preferred construction. The Fig. 8 illustrated media drive 43B is connected to control 26 as indicated in Fig. 3 for media drive 43. Media transfer apparatus 120 holder 121 is shown as a dual media holder for simultaneously holding two caddies 48. Only the caddy in lower receiver 136 is used to load a medium 49 on media device 55B. Upper holder 137 is used in connection with sorter 65A, as next described.

Sorter 65A includes a plurality of sorter receptacles 140 that have front openings 125 facing media transport apparatus 120 and rear openings 126 facing picker 35. A plurality of magazines 42 may simultaneously reside in sorter 65A receptacles 140. One of the sorter 65A resident magazines may be empty to provide temporary storage for media 49 being sorted. Controlled vertical movements of holder 121 in the sorter 65A effects sorting and sorted movement of media 49 within and between magazines 42 located in sorter 65A. Later described algorithms indicate such controlled movements. Both holder 121 receivers are used in the sorting procedures for minimizing sort time. In a lower-cost version, a single receiver is provided in media transfer apparatus 120. Any magazine 42 involved in the sorting may have all of its slots filled with a medium 49.

Fig. 9 diagrammatically illustrates sorters 65 and 66. Sorters 65 and 66 have a number of caddy 48 receivers 141, 142, 151 and 152, respectively. It is preferred that the number of sorter receivers in each sorter is equal to no more than one half the number of caddy 48 positions or slots in a magazine 42. Media sorting (sorting caddies 48) is achieved by selectively, under control 26 commands, retrieve one or more caddies 48 from a magazine 42, as indicated by arrows 145 and 146. Then, picker 35 moves vertically as indicated by double-headed arrow 140 for repositioning magazine 42 with other ones of the receivers for either receiving a retrieved caddy 48 from a sorter receiver 145-6 and 151-2 or yielding a caddy to such sorter receiver, as will become apparent. In this manner media 49 is repositioned in library 25 either within a magazine 42 or between magazines 42. The loaders 60 and 61 may be used in conjunction with sorters 65 and 66 or be used separately for sorting only while media device 43 is not busy receiving and yielding media before and after media accessing.

The diagrammatically illustrated magazine 42 in Fig. 10 carries and stores up to four caddies 48, each caddy for carrying a medium 49, both are represented by heavy dashed lines. Caddy retaining detent 155 (one caddy retaining detent on each side wall of magazine 42) removably retain caddies 48 in magazine 42. Gripper receiving notch 156, at the closed end of magazine 42, facilitates a gripper of picker 35 to fetch, store and carry a magazine 42. Numeral 157 represents a retaining detent notch (one of each side wall of magazine 42) used to retain magazine 42 in a receptacle 122 shown in Fig. 8.

Fig. 11 diagrammatically illustrates in simplified form control data structures usable in practising the present invention. Library inventory data base 160 identifies each medium and its location within library 25. This data base is updated concurrently to any movement of magazines and media such that media status and location are always stored. Library address field 161 indicates the media storage receptacle 31 that is assigned to store the magazine and media identified in the respective data base entry or record. Magazine number field 162 contains a unique number naming the magazines. Magazine status field S 163 contains current status of each magazine as shown in transition data structure 170 that stores data relating to magazines and media currently fetched from their assigned media storage receptacle. Each medium in library 25 is also uniquely identified by a medium number, such as in fields 164 and 167. Numeral 166 indicates additional fields within each record or entry identify other media. Numerals 165 and 168 indicate respectively status fields for the media stored in each magazine.

During sorting or other media/magazine movements (transitions), each medium number involved is identified in field 171. The previous library address is listed in field 172 while field 173 indicates its new library address. Such library addresses relate respectively to the magazines 42 indicated in previous and new magazine number fields 174 and 175. Affinity and other information in field 176 that is detailed in data structure 180. Data structure 180 includes a type field 181 for indicating type of medium, viz optical disk of 1.2 gigabyte data-storing capacity and the like. Fields 182 and 183 respectively store affinity 1 and 2 indications used in connection with virtual RAID structures in library 25. Each virtual RAID is termed RAIL (redundant array inexpensive library) and is identified herein as a logical RAID. Field 185 contains error recovery procedure (ERP) information. Such information includes error rates, non-recovered errors and the like. Field 186 contains an indication as to whether or not the medium should be replaced using the Fig. 2 illustrated automatic media replacement algorithm.

Fig. 12 diagrammatically shows data processing system aspects of using and controlling library 25. Control 26 is controlled by programming in microprocessor 190. This programming is represented herein by the machine operations charts in Fig's 14-19. Host system 191, connected to microprocessor 190 for controlling it in a usual manner, can be a usual host processor or other information handling system. Data storage 192 provides random access data storage for programming, control data structures and the like for microprocessor 190. Library 25 responds to the control effected by microprocessor 190 and control 26 as set forth herein.

Fig. 13 diagrammatically illustrates a plurality of media-containing magazines 200-203 (constructed like magazine 42) carrying media 49 of a virtual RAID, hereinafter referred to as a RAIL set of media, consists of one medium in each of the four magazines 200-203 and located in a same relative slot. For example, a top slot in each of the magazines 200-203 contain RAIL set number 1, a second slot in each of the magazines 200-203 contain RAIL set number 2, etc. Each RAIL set of four media has three data media and one parity medium. The data disks and one parity disk are a known RAIL arrangement for fixed magnetic disks. As in the RAID, each RAIL set includes a parity disk 203 with the remaining disks being data disks 200-202. The RAIL sets are logically defined as affinity groups. Each RAIL set is an affinity 1 extent (four media in four magazines, respectively). Each magazine 200-203 is a separate affinity 2 group for ensuring that all of the media in all four of the RAIL sets stay in the respective magazines. Transfer of one medium from a first magazine to a second magazine, because of the affinity 2 grouping, requires that all media in the first magazine be transferred to the second magazine. This requirement is necessary to maintain integrity of the RAIL sets. The media replacement procedures of Fig. 2 accommodate this requirement by substituting a new medium for an error-prone medium by deleting the error-prone medium, then entering the replacement medium into the RAIL set. It should be noted that the parity and error controls of RAIDs can be used to replicate the data supposedly stored on the error-prone medium in the replacement medium.

Loading media into media device 43 uses the Fig. 14 illustrated machine operations. It is assumed that host 191 and microprocessor 190 have completed their respective preparatory control operations. All that is described are the library 25 operations as commanded by microprocessor 190 via control 26. These algorithms are also used to effect media movements within library 25 for completing the library operations set forth in Fig's 1 and 2. A first magazine is picked in step 210. If step 211 finds media drive 43 empty, then step 212 moves the first magazine to loader 1. Loader 1 responds by retrieving an appropriate caddy from the first magazine, then lowers the caddy as shown in Fig's 4 and 4A. If step 211 finds that media drive 43 currently has a medium in the play position 56, then picker 35 in step 213 carries the first magazine to loader 2. Loader 2 receives the appropriate caddy and stores it until the media drive is ready to use the just received medium. In this regard, control 26 commands media drive 43 to "spin down", that is to slow down the rate of rotation, a current medium in preparation for receiving another medium into the play position 56. "Spinning down" a currently mounted medium in play position 56 is preferably overlapped with steps 210 and 213 for efficient usage of library 25.

From either step 212 or 213, library 25 is notified by control 26 whether the just loaded medium is a last one to be loaded into a media drive. If yes, no more media will be loaded in this set of machine operations. Then, step 225 determines whether or not the first magazine is to be temporarily stored in a holder receptacle 62 or 63. If not, step 226, using picker 35, returns the first magazine to its assigned storage receptacle 31. Otherwise, step 227, using picker 35, temporarily parks the first magazine in the appropriate holder 62 or 63. It is desired to maintain a relative spatial relationship between holders 62-63 and loaders 1 and 2 in that a magazine carrying a medium to loader 1 is always parked in holder 62 while a magazine carrying a medium to loader 2 is always parked in holder 63. Machine operations then proceed to other functions of library 25.

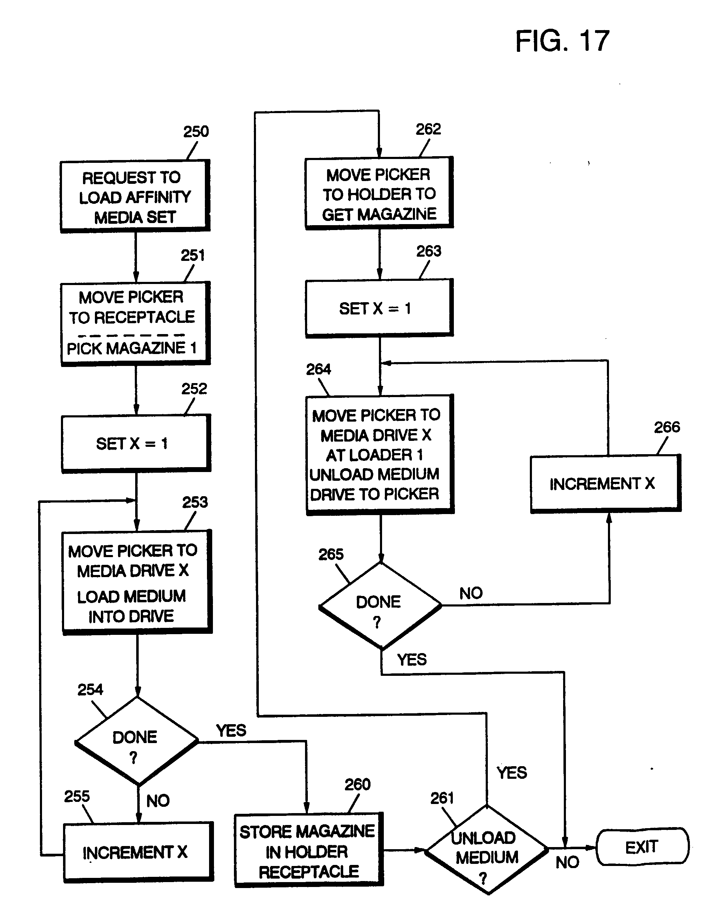

Unloading media from media drive 43 to a source or substitute magazine 42 is shown in Fig. 15. Step 230 actuates picker 35 to move the first magazine from a holder 62-63 to loader 1. Loader 1 is the default media drive unloader. Step 231, using the Fig's 4 and 4A illustrated medium transfer apparatus, moves the medium from play position 56 into the appropriate slot of the first magazine positioned at loader 1. A substitute magazine may be used. Step 232 determines whether or not additional media are to be unloaded from a media drive into the first magazine. If not (last medium, maybe only one medium, has been unloaded), then library 25 exits the operation. Otherwise, additional media are to be unloaded. Step 233 then moves, using picker 35, the first magazine to a next drive to receive or load a medium into that drive. Step 233 may also move the magazine to loader 2 of media drive 43. Step 233 can also move the first magazine to a holder 62-63 for temporarily storing the first magazine near media drive 43. In the event that a RAIL set is stored entirely within one magazine, then that one magazine is carried sequentially to all of the media drives 70-72 for unloading the media in such RAIL set. For RAIL sets in one magazine, the later-described scatter-gather operations of Fig. 17 are used. For a single media drive, the RAIL is best in one magazine. Then one of the holders 62-63 are used to temporarily store the RAIL containing magazine.

Fig. 16 illustrates magazine transport control using a two-magazine carrier for picker 35. That is, the discussion below assumes that picker 35 can carry two magazines 48, such as shown for holder 121 of Fig. 8. It is also assumed that both magazines needed for loading and unloading media are being carried in picker 35. Step 240 leaves a first medium in an empty media drive 43 at loader 1. Step 241 moves the magazine to loader 2 for loading a second medium in loader 2 in step 242. The principles shown in Fig. 16 apply to the illustrated picker 35. One magazine that previously loaded a medium into media drive 43 at step 240 would leave a new medium in loader 2. Then, picker 35 moves the one magazine to loader 1 for unloading the currently mounted medium from play position 56. The movement of picker 35 to loader 2, then to loader 1 is overlapped with spin down of the medium in the play position and movement into loader 1 unload position.

Fig. 17 illustrates a scatter-gather load-unload set of operations useful for RAIL sets stored either as shown in Fig. 13 or in a single magazine. The Fig. 13 illustrated arrangement keeps the RAIL set media physically separated for greater reliability. For the Fig. 13 illustrated arrangement, holders are provided at each of the media drives 43 and 70-72 for temporarily storing the four magazines 200-203 in the immediate vicinity of the respective media drives shown in Fig. 3. The Fig. 17 illustrated operations procedure is applicable to both RAIL set configurations. Step 250 is a request to load an affinity media set, such as a RAIL set. Steps 252-255 are an operations loop for moving magazines 200-203 from their respective storage receptacles to the four media drives 43 and 70-72. Magazine 1 (200) is first picked and moved to media drive 43. Step 252 sets a loop control count to 1. Step 253 moves picker 35 to drive X and load one medium into drive X. In Fig. 13 X=1 is media drive 43 while X=2 through 4 respectively are for media drives 70-72. Step 254 ascertains completion of the four media drive load loop. In the case for one magazine holding a RAIL set, then the same magazine is moved from media drive to media drive. In the case for four magazines 200-203 in a RAIL set, one of the four magazines delivers a respective medium to the four media drives 43 and 70-72, then parks each of the four magazines 200-203 respectively in holder receptacles close to the respective media drives.

If step 254 determines that loading has been completed as in the single magazine RAIL set, step 260 parks or stores the one magazine in a holder receptacle at any one of the media drives. Then, step 261 determines whether or not media are to be unloaded. If yes, then steps 262 through 266 are performed. Steps 262-266 correspond to described steps 251-255 and are not detailed for that reason. The only difference is that media are being unloaded from rather than loaded into media drives 43 and 70-72. Leaving step 265 completes the operations. A variation on the Fig. 17 scatter-gather is to interleave the loading and unloading of media at each drive. Media drive 43 is first loaded in loader 2. Then the magazine is moved to loader 1 for receiving a medium from loader 1. This procedure is repeated at each of the media drives. A potential problem is that media are not kept as an integral affinity group. It is noted that while steps 251-255 are loading media into media drives 43 and 70-72, data processing operations continue in the respective media drives. Spin down can occurring during any portion of the prefetech loading. Unloading proceeds from media drive 72 to media drive 43.

Loading and unloading the Fig. 8 illustrated media drive 43B merely requires inserting the four magazines of a RAIL set into respective loader receptacles 122 the drives 43 and 70-72, all identically constructed. Internal operations of the respective media drives randomly move the media to the respective media devices 55B in the Fig. 8 illustrated media drives.

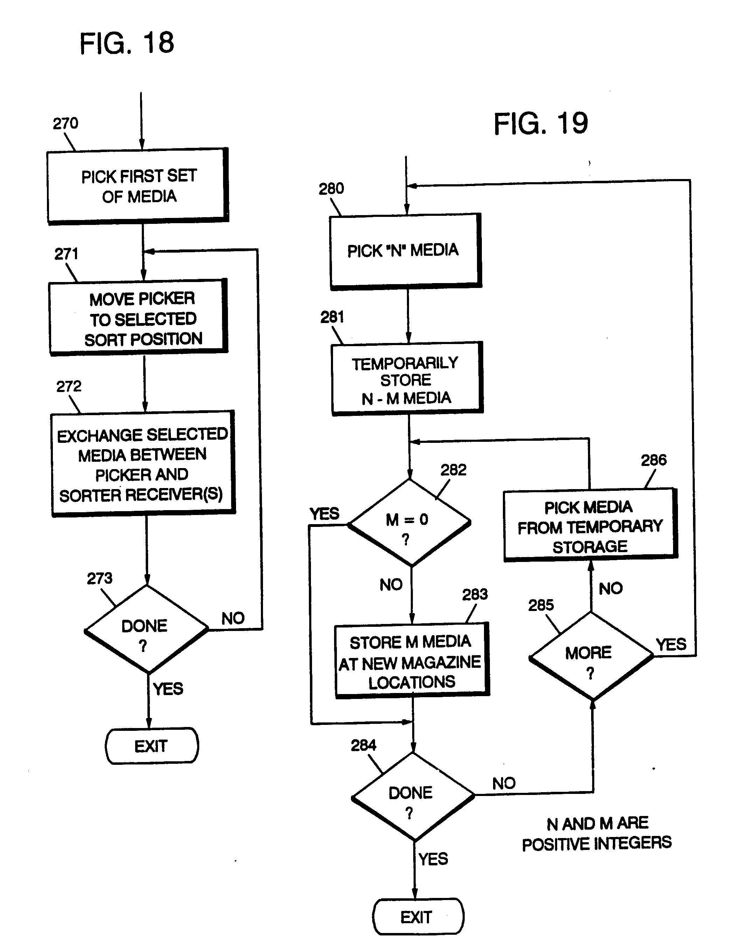

Sorting operations can be performed using loaders 1 and 2 of Fig. 3, the media receivers shown in Fig's 5-7 or the internal media transport apparatus 120 in the Fig. 8 illustrated media drive. The sorting operations are described for Fig. 3 arrangement using picker 42 with the Fig. 9 illustrated sorter receptacles 65 and 66. The description of Fig's 18 and 19 is applicable to the other media drive embodiments. In the Fig. 18 illustration of sorting media within one magazine 43, step 270 picks a first set of media in one or more magazines 42 to be sorted. Step 271 moves picker 42 to a selected sort position, such as shown in Fig. 9 for moving one or two media 49 into receivers 1 and 2 of sorter receptacle 66. Step 272 exchanges media 49 between the sorter receivers and the carried magazine. As the media are removed from one or more magazines into the sorter receivers of Fig. 9 or the loaders 1 and 2 of media drive 43, vacant slots occur for receiving other media to effect the sort. Step 273 determines whether or not the sorting is completed. If not, steps 271-273 are repeated until the media sorting is complete within one magazine.

Sorting and moving media 49 between plural magazines is illustrated in Fig. 19. Fig. 19 assumes that the appropriate magazines 42 have been picked from their respective storage receptacles 31 and are lodged in holder receptacles. Step 280 picks N (N is a positive integer) media from one or more magazines. In Fig. 9 up to four media may be picked in sorters 1 and 2 while two additional media may be picked using both loaders 1 and 2. Step 281 temporarily stores M (M is a positive integer not greater than N) media, such as in sorters and loaders. If M is zero, then the next sorting steps will return all of the N media to the one or more magazines. Otherwise step 283 causes M media to be stored during next loop of media sorting steps. Such storage may be in the sorter receivers or the loaders or in a separate magazine used as a media cache storage. Of course, magazines are shuffled between receptacles during these operations. Step 284 determines whether the media sorting has been completed. If not, then step 285 determines if additional media are to be introduced into the sorting operation. If yes, then steps 280 etc are repeated. Otherwise, step 286 picks media from the temporary storage into an appropriate destination magazine as identified for effecting and completing the media sorting. Such sorting routine employs known techniques of moving elements (such as data elements in a memory rather than using indexing techniques). It is understood that as a number of media to be sorted and number of magazines involved in sorting increases that the procedure may become more involved in details not necessary for an understanding of the present invention.

To further illustrate the invention, selected scenarios of moving one or more magazines are described below. These scenarios show how magazines and media are moved sequentially in different situations. A premise for each scenario precedes the detailed description thereof.

### Scenario 1

Premise: Each magazine has four optical disks. A single media drive 43 has only one input-output port, termed loader 1, accessible by a single-magazine carrying library picker 35. One storage receptacle (holder 1) is located in immediate proximity to media drive 43.
- Step 1.: Move magazine X from its storage receptacle to in front of the sole loader 1 of media drive 43.
- Step 2.: Loader 1 picks a first medium from magazine X that is to be first accessed by media device 55.
- Step 3.: Move magazine X to the holder 1.
- Step 4.: When media device 55 is finished with first medium, move magazine X to loader 1 for receiving the first medium.
- Step 5.: Move magazine X back to its storage receptacle.

From the above scenario it is seen that a long carry of magazine X is avoided by using holder 1 for temporary storage while media drive 43 is accessing an addressed medium 49. If a plurality of media are to be sequentially accessed, then the library picker merely moves magazine X between holder 1 and loader 1 to fetch the medium just finished and insert a medium to be next accessed.

### Scenario 2

Premise: Library 25 has a single-magazine library picker 35, a dual ported media drive 43 and two temporary magazine holders (holder 1 and holder 2). Library control 26 is programmed with a magazine prefetch program (not shown) (ie queuing media in each media drive).
- Step 1.: Move magazine X from its storage receptacle to loader 1 of media drive 43.
- Step 2.: Media drive 43 loads first medium onto media device 55. Library picker moves magazine X to holder 1.
- Step 3.: Move magazine Y form its storage receptacle to loader 2 of media device 43.
- Step 4.: Loader 2 picks second medium from magazine Y.
- Step 5.: Move magazine Y to holder 2. Second medium is now queued for media device 55 in loader 2.
- Step 6.: Media device 55 indicates it has finished with first medium. Loader 1 moves first medium to unload position. Library picker moves, carrying magazine X, toward loader 1.
- Step 7.: Loader 1 returns first medium to magazine X.
- Step 8.: Loader 2 loads second medium onto media device 55 while the library picker is free for transporting other magazines.

This scenario shows queuing a second medium in media drive enabling faster access to the second medium.

### Scenario 3

Premise: Library picker 35 can simultaneously carry two magazines, media device 43 has loaders 1 and 2 and there are no temporary magazine holders.
- Step 1.: Move magazine X to loader 1 with first medium.
- Step 2.: Loader 1 picks first medium from magazine X for loading onto media device 55.
- Step 3.: While loader 1 and media drive 43 are active to access first medium, library picker moves to magazine Y storage receptacle carrying magazine X with it.
- Step 4.: Move magazine Y having second medium from its storage receptacle to loader 2 while media device 55 is accessing first medium. Library picker continues to carry magazine X.
- Step 5.: After media drive has finished with first medium, move magazine X to loader 1 to receive first medium. Loader 2 loads second medium onto media device 55.

This scenario illustrates overlapping media transport with media drive operations using a so-called dual picker.

### Scenario 4

Premise: Library has a dual magazine picker 35 (not shown), media drive 43 has loader 1 and loader 2 and holder 1 is located next to media drive 43, This scenario provides a modification of scenarios 1 and 2 based on using a dual library picker.
- Step 1: Pick magazine X having first medium from its storage receptacle.
- Step 2: Pick magazine Y having second medium from its storage receptacle.
- Step 3: Move both magazines to media drive 43 for performing scenarios 1 and 2.

### Scenario 5

Premise: Library has a single magazine picker 35 while media drive 43 has loader 1 and loader 2. Holders 1 and 2 are not needed.
- Step 1: Move magazine X with first medium to loader 1. Loader 1 picks first medium from magazine X.
- Step 2: Move magazine X back to its storage receptacle. Then library picker moves to storage receptacle to fetch magazine Y.
- Step 3: Move magazine Y with second medium to loader 2. Loader 2 picks second medium for queuing it for media drive 43.
- Step 4: Move magazine Y to loader 1. Loader 1 loads first medium into magazine Y.
- Step 5: Move magazine Y with first medium to its storage receptacle.
- Step 6: Library picker moves to magazine Z storage receptacle for picking magazine Z with third medium.

The procedure continues as described above moving media to media drive, then storing media in a different magazine, storing that magazine and then fetching another magazine. This scenario shows efficient transport of magazines enabled by a dual loader media drive by shifting locations of media among the magazines.

### Scenario 6

Premise: Library has a dual-magazine picker and two media drives 43 and 70 (Fig. 3).
- Step 1: Pick magazine X with first and second media for media drive 43 from its storage location. Then, move to Dick magazine M with first and second media for media drive 70 from its storage location.
- Step 2: Move magazine X to media drive 43. Loader 1 of media drive 43 picks first medium from magazine X. Note that magazine M is on picker but not aligned with either loader 1 nor 2 of media drive 43.
- Step 3: Move magazine X to loader 2 of media drive 43. Loader two picks second medium for media drive 43 for queuing it in media drive 43.
- Step 4: Move magazine M to loader 1 of media drive 70. Loader 1 of media drive 70 picks first medium for media drive 70 for loading it onto media device 55.
- Step 5: Move magazine M to loader 2 of media drive 70. Loader 2 of media drive 70 picks second medium for media drive 70 from magazine M for queuing it in media drive 70.

Scenario 6 illustrates efficiencies of media transport using a dual magazine library picker and two dual-loader media drives. The scenario continues using the principles set forth in the flow charts and in scenarios 1-5.

Scenarios for the Fig's 5-7 illustrate media drive 43A and the Fig. 8 illustrated media drive 43B are readily envisioned based on the flow charts and other descriptions above. The diverse illustrated media drive configurations provide for differing library performance and capacity requirements while using the present invention.

## Claims

1. A media storage library having a two-dimensional array of addressable media storage receptacle locations, said array having an open-side wall with media storage receptacles, each one of said receptacles having an access opening at said open-side wall, said receptacles being respectively disposed at respective ones of said media storage receptacle locations, said receptacles for storing magazines that contain a given plurality of media, a library picker movably disposed with said open-sided wall for randomly accessing any addressed-one of said receptacles through said access openings for picking and storing respective ones of said magazines in said media storage receptacles; comprising
a media drive in said array occupying at least one of said media storage receptacle locations, said media drive having a play position at which said media drive accesses a loaded one of said media disposed in said play position for recording and reading on and from said loaded one of said media;
media loader means in said media drive, said media loader means having a plurality of ports for exchanging said media with said library picker, said media loader means having media storage for storing a predetermined number of said media at any given instant and for randomly loading and unloading media to and from said play position wherein said loading is moving along one dimension of said array a medium to said play position and said unloading is moving a medium along said one dimension of said array from said play position respectively from and to said media loader means;
each of said media receptacles receiving and removably storing one of said magazines;
said library picker carrying at least one of said magazines between an addressed one of said media storage receptacle locations and said media loader means; and
said media loader means having a receiver for removing one of said media in a predetermined respective one of said magazines disposed at said media loader means for moving said one of said media between said predetermined respective one of said magazines and said media drive play position.
said media receptacles respectively receiving and removably storing one of said magazines such that said access opening of each said stored magazine faces into said media receptacles;
said library picker carrying at least one of said magazines between an addressed one of said media storage receptacle locations and said media devices with said open-end of each said carried magazine facing said two-dimensional array;
said play position being in said array aligned vertically with predetermined ones of said storage receptacles;
said media loader means having one media carrier for each of said ports;
each of said media carriers being movably disposed along a given travel path with respect to each other and to said ports for moving media between said play position and said ports; and
bypass means in said media loader means for enabling a predetermined one of said media carriers to bypass any other one of said media carriers not holding a predetermined one of said media during said bypass.

2. The library, as claimed in claim 1, further including, in combination:
said media being optical disks, each one of said optical disks having a first diameter and a spindle receiving aperture at a centre of said optical disk;
caddies respectively holding said optical disks in said media, respectively; each said caddy having a central aperture with a diameter less than said first diameter;
said media drive having a media play device at said play position and a turntable disposed adjacent one end of said travel path and having a diameter less than said first diameter such that each one of said caddies move past said turntable while said optical disk carried by said each one of the caddies is deposited on said turntable for rotation therewith as a loaded optical disk; and
an upstanding spindle on said turntable for engaging said loaded optical disk at said play position through said spindle receiving aperture for positioning said loaded optical disk centrally of said turntable.

3. The library, as claimed in either of claims 1 or 2, further including, in combination:
a given plurality of said storage receptacles disposed in juxtaposition to said media device being holder receptacles for temporarily storing a predetermined one of said magazines; and
said library picker responding to said receiver receiving one of said media from said carried magazine to move said carried magazine for said temporary storage in said holder receptacle as said predetermined one of said magazines.

4. The library set forth in any preceding claim, further including, in combination:
said magazines having a number of media-receiving slots equal to said given plurality of said media, said media carried by each of said magazines being stored in a respective predetermined ones of said slots;
control means in said library for sequencing said library picker to exchange sorting predetermined media from a predetermined carried sorting one of said magazines with said media carriers without loading any of said sorting predetermined media into said play position; and
moving said predetermined carried one of said magazines in a predetermined sequence such that said sorting predetermined media are lodged respectively in said predetermined carried sorting one of said magazines in respective slots different than said predetermined ones of said slots whereby said sorting ones of said media are sorted in that said sorting ones of said media are stored in different ones of said slots.

5. The library set forth in any preceding claim, further including, in combination:
a predetermined number of said storage receptacles being sorter receptacles;
each said sorter receptacles having a plurality of media sorting receivers for receiving respective sorting ones of said media; and
said library picker moving a sorting one of said magazines to said sorter receptacles for exchanging said sorting ones of said media with said sorting receivers and moving in a predetermined sequence for exchanging predetermined ones of said sorting media with respective ones of said sorting receivers at each stop of said library picker in said sequence for moving said sorting media to diverse positions within said sorting magazine.

6. The library set forth in any preceding claim, further including, in combination:
means in the library for indicating that certain predetermined ones of said media are error prone;
control means connected to said library picker for moving ones of said magazines having said error prone media to a predetermined one of said sorter receptacles for moving said error prone media into said predetermined one of said sorter receptacles; and
said control means actuating said library picker to move an empty one of said magazines to said sorter receptacle for retrieving said error prone media from said sorter receptacle whereby said error prone media are collected into said empty one of said magazines.

7. The library set forth in claim 1, further including, in combination:
said media drive having a one-receptacle wide columnar array of said media storage receptacle locations, said media storage receptacle locations in one-receptacle wide columnar array being drive receptacle locations, said drive receptacle locations being disposed in said two-dimensional array, each said drive receptacle location having a drive opening at an opposite end of said drive receptacle from said access opening;
a media player in said media drive disposed adjacent one end of said columnar array, said media player having means for supporting one of said media in said play position and having transducer means for being in a transducing relationship with a one of said media disposed in said play position; and
media transfer means extending co-extensively with said drive openings of said drive receptacle locations, said media transfer means having a media holder movably disposed with respect to said columnar array and said media player play position for reciprocating motions along a travel path aligned with said columnar array, said media transfer means media holder having gripping means for gripping a predetermined one of said media in a given one of said magazines disposed in a predetermined one of said drive receptacle locations for removing and inserting one of said media disposed in said given one of said magazines at a time and for loading a gripped one of said media to said play position;
said media being respective optical disks disposed on caddies; and
said media player being an optical disk player having a turntable facing said media transfer means at one end of said travel path such that said turntable is said play position;
said columnar array having a certain number of said drive receptacle locations remotely disposed from said media player storing a certain number of said magazines, respectively; and
control means connected to said media transfer means for sequencing movement of said media holder along said travel path across said certain number of said magazines for fetching and storing predetermined sorting ones of said caddies in said certain number of said magazines for sorting said optical disks amongst said certain number of said magazines.

8. The library set forth in any preceding claim, further including, in combination:
a second number of said media drives in said library;
a plurality of sets of said media in respective redundant arrays of said media, each said redundant array having said second number of said media as redundant array media;
said redundant array media having error detection redundancies in a first predetermined one of said redundant array media calculated from data stored in other ones of said redundant array media;
control means connected to all of said second number of said media drives;
said control means having set load means for actuating said picker and said second number of said media drives to first load all of said redundant array media of a predetermined one of said sets into respective ones of said second number of said media drives; and
said control means having set unload means for actuating said picker to second unload all of said redundant array media of said predetermined one of said sets from said respective ones of said second number of said media drives.

9. The library set forth in claim 8, further including, in combination:
each one of said redundant array media in each one of said sets being stored in respective ones of said magazines, said respective ones of said magazines storing said redundant array media being redundant array magazines.

10. The library set forth in claim 9, further including, in combination:
said redundant array magazines storing said plurality of said media of said redundant array sets, each said redundant array magazine storing only one of said redundant array media from each of said redundant array sets.

11. The library set forth in claim 10, further including, in combination:
said second number of holder receptacles disposed in said two-dimensional array respectively in juxtaposition to said second number of said media drives; and
said control means having redundant means for actuating said picker to store said redundant array magazines in respective ones of said second number of holder receptacles while said second number of said media drives have respective ones of said redundant array media loaded in said second number of media drives of a predetermined one of said redundant array sets.

12. The library set forth in any of claims 8 to 11, further including, in combination:
a predetermined one of said magazines storing said redundant array media of a predetermined one of said redundant array sets.

13. The library set forth in any of claims 8 to 12, further including, in combination:
each one of said second number of said media drives being disposed in juxtaposition to all of said second number of said media drives.

14. A method of operating a media library having a two-dimensional array of addressable media storage receptacle locations, said array having an open-side wall with media storage receptacles having access openings, respectively, at said open-side wall and disposed at respective ones of said media storage receptacle locations, said receptacles for storing magazines that contain a plurality of media, a picker movably disposed with said open-sided wall for randomly accessing any addressed-one of said receptacles through said access openings, respectively, an improvement including method steps of:
providing a media drive in said array to occupy at least one of said media storage receptacle locations, establishing a play position in said media drive for enabling accessing a loaded one of said media disposed in said play position for recording and reading on and from said loaded one of said media;
providing media loader means in said media drive, said media loader means having a plurality of ports for transferring said media between said loader and said picker along one of said dimensions of said array;
removably storing said magazines in said receptacles, respectively;
carrying in said picker at least one of said magazines between an addressed one of said media receptacles and said media loader means;
randomly accessing said carried media from said media loader means and moving said accessed carried media to said play position;
providing access openings at respective one ends of said magazines for respectively insetting and removing said media into and from said magazines;
inserting said magazines into respective ones of said media receptacles respectively with said access openings facing into said media receptacles, respectively; and
carrying said magazines in said picker between an addressed one of said media receptacles and said media drive with said access-opening of each said carried magazine facing said two-dimensional array.

15. Method set forth in claim 14, including steps of:
detecting and indicating that predetermined ones of said media are error-prone media;
fetching said magazines containing said error-prone media;
removing all of said error-prone media from said fetched magazines;
then, inserting said removed error-prone media into exit ones of said magazines; and
exiting all of said exit ones of said magazines having said error prone media from said library.

16. The method set forth in either of claims 14 or 15, including steps of:
indicating that predetermined ones of said media having predetermined related stored data but are disposed in said library in predetermined diverse ones of said magazines in predetermined spaced-apart locations in said library;
fetching all of said predetermined diverse ones of said magazines;
removing said predetermined ones of said media from said fetched magazines;
collecting those removed media into groups of said removed media having said related stored data;
inserting said groups into like magazines; and
storing said like magazines in predetermined juxtaposed ones of said media receptacles.

17. The method set forth in any of claims 14, 15 or 16, including steps of:
selecting a first number of said media as a media set;
storing data in said media in said media set including error detection data in a predetermined one of said first number of said media;
substantially simultaneously loading all of said first number of media of said media set in a first number of media drives in said library, respectively; and
substantially simultaneously unloading all of said first number of media of said media set from said first number of media drives, respectively.

18. The method set forth in any of claims 14, 15, 16, or 17, including steps of:
selecting said first number of said magazines as a magazine set; and
respectively storing said first number of said media set in said first number of said magazines in said magazine set.
